# EUROPÄISCHE PATENTSCHRIFT

(11) **EP 0 321 917 B1**
(45) Veröffentlichungstag und Bekanntmachung des Hinweises auf die Patenterteilung: **10.11.1993**
(21) Anmeldenummer: 88121273.2
(22) Anmeldetag: 20.12.1988
(51) Int. Cl.: C08G 77/60, C04B 35/58

(54) **Polymere Hydridothiosilazane, Verfahren zu ihrer Herstellung, sowie die Herstellung Siliziumnitrid enthaltender keramischer Materialien**
Polymeric hydridothiosilazanes, process for their preparation and preparation of silicon nitride-containing ceramic materials
Polymères d'hydridothiosilazanes, leur procédé de préparation et procédé de préparation de matériels céramiques contenant du nitrure de silicium

(30) Priorität: 23.12.1987 DE 3743826
(43) Veröffentlichungstag der Anmeldung: 28.06.1989
(73) Patentinhaber: HOECHST AKTIENGESELLSCHAFT, 65926 Frankfurt am Main (DE)
(72) Erfinder: Vaahs, Tilo, Dr., D-6233 Kelkheim Taunus (DE); Kleiner, Hans-Jerg, Dr., D-6242 Kronberg Taunus (DE); Peuckert, Marcellus, Dr., D-6238 Hofheim am Taunus (DE); Brück, Martin, D-6238 Hofheim am Taunus (DE)

(56) Entgegenhaltungen:
- US-A- 3 344 161
- US-A- 4 482 669
- US-A- 4 693 914

## Beschreibung

Die Erfindung betrifft neue polymere Hydridosilazane, die chemisch gebundenen Schwefel enthalten (im folgenden auch als "polymere Hydridothiosilazane" bezeichnet), ihre Herstellung, sowie ihre Weiterverarbeitung zu Siliziumnitrid enthaltendem keramischen Material. Das Siliziumnitrid enthaltende keramische Material wird durch Pyrolyse aus den polymeren Hydridothiosilazanen erhalten und besteht zum größten Teil aus Siliziumnitrid, welches Anteile an Siliziumkarbid und Kohlenstoff enthält.

Die Pyrolyse von Polysilazanen zu Siliziumnitrid enthaltendem keramischen Material wurde bereits in der Literatur (R.R. Wills et al., Ceramic Bulletin, Vol. 62 (1983), 904-915) beschrieben.

Zur Herstellung von Polysilazanen werden in der Regel Chlorsilane als Ausgangsmaterialien eingesetzt und diese mit Ammoniak, primären oder sekundären Aminen umgesetzt (US-PS 4 540 803, US-PS 4 543 344, US-PS 4 595 775, US-PS 4 397 828, US-PS 4 482 669). Nach US-PS 4 482 669 wird ein Dichlorhydridoalkylsilan der Formel RSiHCl₂ mit NH₃ zu Oligohydridoalkylsilazanen (RSiHNH)ₙ umgesetzt und diese dann, z.B. mit Hilfe von KH unter Wasserstoffeliminierung zu Polysilazanen kondensiert.

Die vorliegende Erfindung stellt neue Ausgangsmaterialien für Siliziumnitrid enthaltende keramische Materialien zur Verfügung, nämlich polymere Hydridothiosilazane.

Ein Gegenstand der vorliegenden Erfindung ist ein Verfahren zur Herstellung von polymeren Hydridothiosilazanen, dadurch gekennzeichnet, daß man Oligohydridoalkylsilazane der allgemeinen Formel (RSiHNH)n, worin n etwa 3 bis 12 ist und R = C₁-C₆-Alkyl oder C₂-C₆-Alkenyl ist, mit elementarem Schwefel in einem Ether als Lösungsmittel bei 30 bis 120°C umsetzt. Vorzugsweise arbeitet man bei 60 bis 80°C.

Die als Ausgangsprodukte eingesetzten Oligohydridoalkylsilazane (RSiHNH)ₙ, mit n etwa gleich 3 bis etwa gleich 12, können dadurch erhalten werden, daß man ein Dichlorhydridoalkylsilan der Formel RSiHCl₂, wobei R die obige Bedeutung hat, mit überschüssigem NH₃ in einem Lösungsmittel umsetzt, wie in US-PS 4 482 669 beschrieben (siehe dort insbesondere Spalten 4, 5, 7, 8). Dabei entsteht im allgemeinen ein Gemisch linearer und cyclischer Oligomerer mit verschiedenen Kettenlängen n.

Vorzugsweise ist R = Methyl oder Vinyl. Die Oligohydridoalkylsilazane (RSiHNH)ₙ werden im folgenden auch kurz "Oligosilazane" genannt.

Vorzugsweise beträgt das molare Verhältnis Schwefel : RSiHNH-Einheit des Oligosilazans bei der Herstellung der polymeren Hydridothiosilazane 0,1 : 1 bis 1 : 1, insbesondere 0,6 : 1 bis 0,8 : 1.

Zur Umsetzung der Reaktanten miteinander werden die Oligosilazane in einem Ether als Lösungsmittel vorgelegt und der Schwefel zugegeben.

Die Reaktionsdauer richtet sich nach der Reaktionstemperatur. Im allgemeinen genügt eine Reaktionszeit von 1 bis 7 Stunden. Als Lösungsmittel eignen sich Ether wie THF, Diethylenglykoldiethylether.

Die erfindungsgemäßen polymeren Hydridothiosilazane werden dann durch Abdestillation des Lösungsmittels unter reduziertem Druck erhalten.

Gegebenenfalls kann das Verfahren auch unter vermindertem Druck durchgeführt werden. Auch bei Drücken im Bereich von 1 bis 10 Atmosphären kann gearbeitet werden.

Der Schwefel wird im allgemeinen portionsweise zugegeben. Er löst sich in der Lösung des Oligosilazans und färbt diese zunächst gelb. Die Färbung verschwindet wieder in dem Maße, in dem der Schwefel mit den Oligosilazanen abreagiert. Dabei werden 40 bis 60 % des eingesetzten Schwefels in das entstehende Polysilazan eingebaut, während der Rest als Schwefelwasserstoff entweicht.

K. Rühlmann et al. (Z. Chem. 5 (1965) Seite 107) berichten über die Darstellung und Isolierung der Oligosilazane Triisopropylcyclotrisilazan 1 und Tetraisopropylcyclotetrasilazan 2. Des weiteren wurden Dehydrierungsversuche mit diesen Verbindungen durchgeführt, die ohne weitere Angaben in der folgenden Weise zusammengefaßt werden: "Versuche zur Dehydrierung von 1 und 2 mit Schwefel, Selen und Platin auf Aktivkohle führten unter Wasserstoff- und Ammoniakabspaltung zur Bildung spröder, in Benzol und Äther löslicher Harze".

Bei der erfindungsgemäßen Umsetzung von Oligosilazanen mit Schwefel, die in Ethern als Lösungsmitteln durchgeführt wird, entsteht dagegen H₂S anstelle von H₂ und NH₃. Dies zeigt deutlich, daß ein anderer Reaktionsweg eingeschlagen wird, weswegen sich die Reaktionsprodukte des erfindungsgemäßen Verfahrens von denen der genannten Literaturstelle grundsätzlich im Aufbau und damit in den physikalischen und chemischen Eigenschaften unterscheiden.

Die hergestellten neuen polymeren Hydridothiosilazane haben eine molekulare Struktur, die durch die Formel 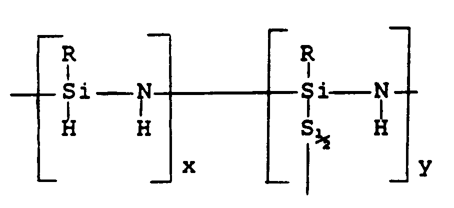
R=C₁-C₆-Alkyl oder C₂-C₆-Alkenyl
x+y=1
wiedergegeben werden kann. Dabei ist der Wert von y ein Maß für den Schwefelgehalt des Polysilazans. Die Siliziumatome sind dabei nicht direkt miteinander verbunden, sondern über NH-Gruppen oder S-Atome. Das Verhältnis Si : N in den polymeren Hydridothiosilazanen beträgt etwa 1 : 1 bis 1,2 : 1.

Ein weiterer Gegenstand der vorliegenden Erfindung sind demgemäß polymere Hydridothiosilazane der Formel 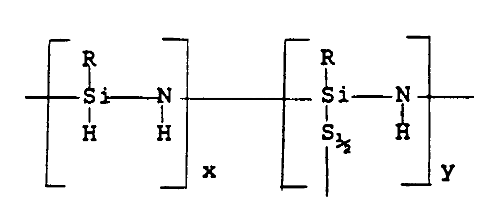
wobei R= C₁-C₆-Alkyl oder C₂-C₆-Alkenyl ist und x, y die Molfraktionen der beiden Struktureinheiten bedeuten.

Der Wert von y ist umso höher (und entsprechend der Wert von x umso niedriger), je größer das Verhältnis Schwefel : RsiHNH-Einheit des Oligosilazans ist. Die jeweils vorliegenden Werte von x und y können durch Integration der ¹H-NMR-Spektren und durch die Elementaranalyse ermittelt werden. Bevorzugt sind solche polymeren Hydridothiosilazane, bei denen die Werte für y bei 0,6 bis 0,8 liegen, insbesondere bei 0,7 bis 0,8. Diese Werte lassen sich wie gesagt über den relativen Anteil des Schwefels im Reaktionsgemisch einstellen und über die genannten Analysenmethoden kontrollieren. Die eben genannten bevorzugten Werte für x, y haben sich besonders bewährt, wenn als Endprodukt der Reaktion ein festes, lösliches Polyhydridothiosilazan entstehen soll. Diese Voraussetzung ist notwendig, wenn eine Formgebung zu Monolithen oder Fasern angestrebt wird.

Ein weiterer Gegenstand der Erfindung sind polymere Hydridothiosilazane, dadurch erhältlich, daß man Oligohydridoalkylsilazane der allgemeinen Formel (RSiHNH)ₙ, worin n etwa 3 bis etwa 12 ist und R = C₁-C₆-Alkyl oder C₂-C₆-Alkenyl ist, mit elementarem Schwefel in einem Ether als Lösungsmittel bei 30 bis 120°C umsetzt.

Die neuen polymeren Hydridothiosilazane (auch kurz "Polyhydridothiosilazane" genannt) können durch Umsetzung mit Ammoniak ("Ammonolyse") in Polyhydridosilazane überführt werden, die wiederum durch Pyrolyse in Siliziumnitrid enthaltendes keramisches Material umgewandelt werden können.

Die Ammonolyse kann in flüssigem NH₃ erfolgen. Es ist jedoch vorteilhaft, sie in einem organischen Lösungsmittel durchzuführen. Geeignet sind alle Lösungsmittel, die sich inert gegenüber den Polyhydridothiosilazanen verhalten. Bevorzugt sind solche Lösungsmittel, in denen das als Nebenprodukt anfallende Ammoniumsulfid geringe Löslichkeit und gute Abtrennbarkeit aufweist, z.B. Ether, aliphatische und aromatische Kohlenwasserstoffe, chlorierte Kohlenwasserstoffe. Die Reaktanten können bei der Ammonolyse in beliebiger Reihenfolge in das Reaktionsgefäß eingespeist werden. Es ist jedoch zumeist vorteilhaft, das Polyhydridothiosilazan in Lösung vorzulegen und gasförmigen Ammoniak einzuleiten oder flüssigen Ammoniak hinzuzufügen. Wurden die erfindungsgemäßen Polyhydridothiosilazane in einem geeigneten organischen Lösungsmittel hergestellt, so kann die Ammonolyse anschließend und ohne Isolierung des Polyhydridothiosilazans in diesem Lösungsmittel durchgeführt werden. Die Ammonolyse wird vorzugsweise mit einem Überschuß NH₃ durchgeführt, um sicher zu gehen, daß die Reaktion vollständig ist und die Endprodukte möglichst weitgehend schwefelfrei sind. Im allgemeinen reicht für diesen Zweck die doppelte stöchiometrische Menge, wobei die stöchiometrische Menge 3 Mol NH₃ pro Mol S beträgt.

Im allgemeinen wird bei einer Temperatur von etwa -50 bis +100°C gearbeitet, vorzugsweise bei -20 bis +30°C, insbesondere bei Raumtemperatur (wobei mit Eis gekühlt wird). Es ist jedoch auch möglich, oberhalb Raumtemperatur, z.B. bei der Siedetemperatur des verwendeten Lösungsmittels, oder unterhalb Raumtemperatur, z.B. bei -33°C bei Verwendung von flüssigem NH₃ zu arbeiten.

Nach beendeter Ammonolyse wird ggf. das überschüssige NH₃ entfernt und das angefallene Ammoniumchlorid abfiltriert. Zur Erhöhung der Ausbeute kann der Niederschlag mit einem der obengenannten organischen Lösungsmittel gewaschen werden. Nach Abdestillation des Lösungsmittels bei vermindertem Druck werden die Polyhydridosilazane unmittelbar als weiße Pulver erhalten. Die Polyhydridosilazane sind in den obigen organischen Lösungsmitteln löslich, so daß diese sowohl für das Beschichten von Oberflächen als auch für die Herstellung von Fasern verwendet werden können.

Die Polyhydridosilazane können durch Pyrolyse in inerter Atmosphäre bei Temperaturen von 800 bis 1200°C zu amorphen, dichten Materialien pyrolysiert werden, die im wesentlichen aus Si, N und C bestehen und in Spuren auch H und O enthalten können. Die inerte Atmosphäre kann dabei aus N₂, Ar oder He bestehen, vorzugsweise nimmt man N₂ oder Ar. Bei Pyrolysetemperaturen oberhalb 1200°C, etwa im Bereich von 1200°C bis 1400°C, entstehen teilamorphe, mikrokristalline keramische Werkstoffe, die als kristalline Phase α-Si₃N₄ enthalten.

Ein besonderer Vorteil ist, daß sich die Polyhydridosilazane vor der Pyrolyse nach verschiedenen Verfahren zu dreidimensionalen Formkörpern formen lassen.

Eine wichtige Methode der Formgebung ist das Ziehen von Fasern. Dabei lassen sich Fasern aus hochviskosen Lösungen des Polyhydridosilazans in Lösungsmitteln, wie Toluol, THF oder Hexan ziehen. Das Fasernziehen geschieht vorteilhafterweise mittels Spinndüsen von 80 bis 150 µm Durchmesser. Durch anschließendes Strecken wird der Faden verjüngt, so daß nach der Pyrolyse ein sehr fester Faden von 2 bis 20 µm, insbesondere 5 bis 15 µm Durchmesser entsteht. Die durch anschließende Pyrolyse hergestellten Fasern finden Verwendung als mechanische Verstärkungseinlagerungen in faserverstärktem Aluminium, Aluminiumlegierungen und Keramikbauteilen.

Eine weitere wichtige Verarbeitungsmöglichkeit der Polyhydridosilazane ist die Herstellung dichter, gut haftender, amorpher oder mikrokristalliner keramischer Beschichtungen auf Metallen, insbesondere Stählen, oder auf Keramiken wie Al₂O₃, ZrO₂, MgO, SiC oder Si₃N₄. Die Beschichtung erfolgt mit Hilfe einer Lösung des Polyhydridosilazans in organischen Lösungsmitteln wie Toluol, THF, Hexan. Die pyrolytische Umwandlung in eine amorphe bzw. mikrokristalline Schicht erfolgt im gleichen Temperaturbereich von 800 bis 1200°C bzw. 1200 bis 1400°C unter Inertgas wie oben bei dreidimensionalen Formkörpern beschrieben.

Die keramischen Beschichtungen eignen sich wegen ihrer hervorragenden Haftung, hohen Härte und Oberflächengüte besonders zur Oberflächenveredelung von mechanisch und chemisch beanspruchten Maschinenbauteilen.

Weiter kann man die oben beschriebenen Polyhydridosilazane mit gleichhoher keramischer Ausbeute von 70 bis 90 % statt in Inertgas auch in NH₃-Atmosphäre pyrolysieren. Dabei resultiert ein praktisch kohlenstofffreier, glasklarer, farbloser Werkstoff. Bei der Pyrolyse in NH₃ bei 1000°C oder höher liegt der C-Gehalt unterhalb 0,5 Gew.-%. Das Pyrolyseprodukt besteht je nach Pyrolysetemperatur aus praktisch reinem amorphen Siliziumnitrid (Pyrolyse unterhalb 1200°C) oder kristallinem Si₃N₄ (Pyrolyse oberhalb 1200°C, insbesondere oberhalb 1300°C). Die Pyrolyse in NH₃ läßt sich auf alle nach den oben beschriebenen Formgebungsverfahren hergestellten Formkörper, also aus Pulvern geformte Körper, Fasern, Beschichtungen anwenden.

Man kann jedoch - statt die polymeren Hydridothiosilazane erst in schwefelfreie Polyhydridosilazane und diese dann in Siliziumnitrid enthaltende keramische Materialien umzuwandeln - die polymeren Hydridothiosilazane auch direkt pyrolysieren und erhält dabei ebenfalls Siliziumnitrid enthaltende keramische Materialien.

Ein weiterer Gegenstand der Erfindung ist daher ein Verfahren zur Herstellung von Siliziumnitrid enthaltendem keramischen Material, dadurch gekennzeichnet, daß man die oben durch ihre Strukturformel oder durch das Verfahren zu ihrer Herstellung definierten polymeren Hydridothiosilazane in inerter Atmosphäre bei 800 bis 1400° pyrolisiert.

Günstiger ist es jedoch, diese Pyrolyse statt in inerter Atmosphäre, in NH₃-Atmosphäre durchzuführen. Dabei erhält man ebenfalls Siliziumnitrid enthaltendes keramisches Material. Für die Pyrolyse der polymeren Hydridothiosilazane in NH₃-Atmosphäre gilt dasselbe, was oben für die Pyrolyse der Polyhydridosilazane (die durch Umsetzung mit NH₃, d.h. Ammonolyse, aus den polymeren Hydridothiosilazanen hergestellt werden können) gesagt wurde. Die polymeren Hydridothiosilazane lassen sich vor der Pyrolyse nach verschiedenen Verfahren zu dreidimensionalen Formkörpern formen. Insbesondere kann man Siliziumnitrid enthaltende kermamische Fasern oder Beschichtungen herstellen, indem man die polymeren Hydridothiosilazane zunächst in einem organischen Lösungsmittel wie Toluol, THF oder Hexan löst, dann Fasern zieht oder eine Beschichtung vornimmt und diese nach Verdampfung des Lösungsmittels in NH₃-Atmosphäre pyrolysiert. Wieder erhält man bei 800 bis 1200°C amorphes und bei 1200 bis 1400°C kristallines Si₃N₄.

### Versuchsbericht:

### Herstellung von Oligohydridomethylsilazan (CH₃SiHNH)ₙ

In 800 ml absolutem THF wurden 100 ml (0,97 mol) Methyldichlorsilan gelöst und für 3 Stunden Ammoniak eingeleitet (Einleitgeschwindigkeit: 0,5 l/min). Durch Kühlen mit einem Eisbad wurde die Reaktionstemperatur im Bereich von 20 bis 25°C gehalten. Zur Vervollständigung der Reaktion wurde 1 h bei Raumtemperatur gerührt und anschließend unter Argon das Ammoniumchlorid abgetrennt. Der Niederschlag wurde 2mal mit je 350 ml THF gewaschen und die vereinigten THF-Lösungen unter reduziertem Druck eingeengt. Man erhielt ein klares, leicht bewegliches Öl von (CH₃SiHNH)ₙ in einer Ausbeute von 44,5 g = 78 % der Theorie.

### Beispiel 1

In einem Rundkolben mit Rückflußkühler und Rührvorrichtung wurden 0,1 mol Oligohydridomethylsilazan (CH₃SiHNH)ₙ (Anzahl der Mole bezogen auf die in Klammern stehende Monomereinheit) unter Stickstoff in 40 ml THF gelöst und zum Rückfluß erhitzt. Man ließ in stetigem, langsamen Strom Stickstoff überströmen und leitete das Abgas in Chlorbleichlauge ein. Dort wurden die bei der Reaktion mit Schwefel entstehenden flüchtigen, geruchsintensiven Schwefelverbindungen zu geruchlosen Oxidationsprodukten umgesetzt.

Es wurden portionsweise 0,07 mol Schwefel zugegeben. Damit betrug das Verhältnis CH₃SiHNH zu Schwefel 1 : 0,7.

Der Schwefel löste sich vollständig unter Bildung einer gelben Lösung. Die Farbe verblaßte langsam in dem Maße, in dem der Schwefel mit den SiH-Gruppen reagierte, d.h. im Laufe von 2 Stunden.

Anschließend ließ man abkühlen und destillierte das Lösungsmittel bei Unterdruck und Raumtemperatur ab. Es blieb ein fester, weißer Rückstand von 6,1 g. Dieser besaß ein Si : N-Verhältnis von 1 : 0,83 und einen Schwefelanteil von 8 Gew.-%. Dem entspricht die folgende Struktur: 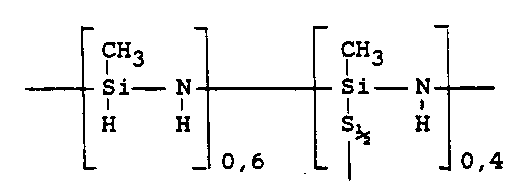
Damit entsprechen die erhaltenen 6,1 g des polymeren Hydridothiosilazans einer Ausbeute von 94 %.

## Patentansprüche

1. Verfahren zur Herstellung von polymeren Hydridothiosilazanen, dadurch gekennzeichnet, daß man Oligohydridoalkylsilazane der allgemeinen Formel (RSiHNH)ₙ, worin n etwa 3 bis 12 ist und R = C₁-C₆-Alkyl oder C₂-C₆-Alkenyl ist, mit elementarem Schwefel in einem Ether als Lösungsmittel bei 30 bis 120°C umsetzt.

2. Verfahren zur Herstellung von polymeren Hydridothiosilazanen, dadurch gekennzeichnet, daß man Oligohydridoalkylsilazane, die durch Reaktion eines Dichlorhydridoalkylsilans RSiHCl₂ mit NH₃ erhalten worden sind, mit elementarem Schwefel in einem Ether als Lösungsmittel bei 30 bis 120°C umsetzt, wobei R = C₁-C₆-Alkyl oder C₂-C₆-Alkenyl ist.

3. Verfahren nach Anspruch 1 oder 2, dadurch gekennzeichnet, daß R = Methyl oder Vinyl ist.

4. Verfahren nach einem der Ansprüche 1 bis 3, dadurch gekennzeichnet, daß das molare Verhältnis von Schwefel zu einer RsiHNH-Einheit des Oligohydridoalkylsilazans 0,1 : 1 bis 1 : 1 beträgt.

5. Polymere Hydridothiosilazane der Formel 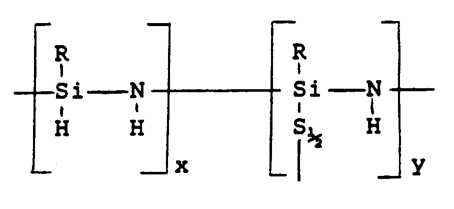 wobei R = C₁-C₆-Alkyl oder C₂-C₆-Alkenyl ist und x, y die Molfraktionen der beiden Struktureinheiten bedeuten.

6. Polymere Hydridothiosilazane nach Anspruch 5, dadurch gekennzeichnet, daß y = 0,6 bis 0,8 ist.

7. Polymere Hydridothiosilazane nach Anspruch 5 oder 6, dadurch gekennzeichnet, daß R = Methyl oder Vinyl ist.

8. Polymere Hydridothiosilazane, erhältlich nach dem Verfahren gemäß einem der Ansprüche 1 bis 4.

9. Verfahren zur Herstellung von Siliziumnitrid enthaltendem keramischen Material, dadurch gekennzeichnet, daß man polymere Hydridothiosilazane gemäß einem der Ansprüche 5 bis 8 in inerter Atmosphäre bei 800 bis 1400°C pyrolysiert.

10. Verfahren zur Herstellung von Siliziumnitrid enthaltendem keramischen Material, dadurch gekennzeichnet, daß man polymere Hydridothiosilazane gemäß einem der Ansprüche 5 bis 8 in NH₃-Atmosphäre bei 800 bis 1400°C pyrolysiert.

11. Verfahren nach Anspruch 10, dadurch gekennzeichnet, daß man zur Herstellung von Siliziumnitrid enthaltenden keramischen Fasern die polymeren Hydridothiosilazane zunächst in einem organischen Lösungsmittel löst, aus dieser Lösung Fasern zieht und diese nach Verdampfung des Lösungsmittels pyrolysiert.

12. Verfahren nach Anspruch 10, dadurch gekennzeichnet, daß man zur Herstellung von Siliziumnitrid enthaltenden keramischen Formkörpern die pulverförmigen polymeren Hydridothiosilazane vor der Pyrolyse zu Formkörpern preßt.

13. Verfahren nach Anspruch 10, dadurch gekennzeichnet, daß man zur Herstellung von Siliziumnitrid enthaltenden keramischen Beschichtungen die polymeren Hydridothiosilazane zunächst in einem organischen Lösungsmittel löst, mit dieser Lösung die Beschichtung vornimmt und diese nach Verdampfung des Lösungsmittels pyrolysiert.

14. Verfahren nach einem der Ansprüche 9 bis 13, dadurch gekennzeichnet, daß man bei 800 bis 1200°C pyrolysiert.

15. Verfahren nach einem der Ansprüche 9 bis 13, dadurch gekennzeichnet, daß man bei 1200 bis 1400°C pyrolysiert.

## Claims

1. A process for the preparation of a polymeric hydridothiosilazane, which comprises reacting an oligohydridoalkylsilazane of the formula (RSiHNH)ₙ in which n is approximately 3 to 12 and R is C₁-C₆-alkyl or C₂-C₆-alkenyl, with elemental sulfur in an ether as solvent at 30 to 120°C.

2. A process for the preparation of a polymeric hydridothiosilazane, which comprises reacting an oligohydridoalkylsilazane obtained by reacting a dichlorohydridoalkylsilane RSiHCl₂ with NH₃, with elemental sulfur in an ether as solvent at 30 to 120°C, where R is C₁-C₆-alkyl or C₂-C₆-alkenyl.

3. The process as claimed in claim 1 or 2, wherein R is methyl or vinyl.

4. The process as claimed in any one of claims 1 to 3, wherein the molar ratio between sulfur and an RSiHNH unit of the oligohydridoalkylsilazane is 0.1 : 1 to 1 : 1.

5. A polymeric hydridothiosilazane of the formula 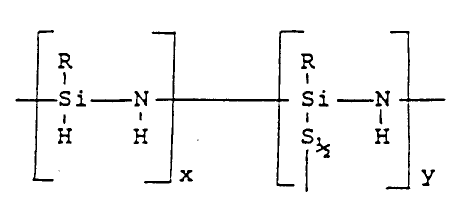 where R is C₁-C₆-alkyl or C₂-C₆-alkenyl and x and y denote the molar fractions of the two structural units.

6. A polymeric hydridothiosilazane as claimed in claim 5, wherein y is 0.6 to 0.8.

7. A polymeric hydridothiosilazane as claimed in claim 5 or 6, wherein R is methyl or vinyl.

8. A polymeric hydridothiosilazane obtainable by the process as claimed in any one of claims 1 to 4.

9. A process for the preparation of silicon nitride-containing ceramic material, which comprises pyrolyzing a polymeric hydridothiosilazane as claimed in any one of claims 5 to 8 in an inert atmosphere at 800 to 1400°C.

10. A process for the preparation of silicon nitride-containing ceramic material, which comprises pyrolyzing a polymeric hydridothiosilazane as claimed in any one of claims 5 to 8 in an NH₃ atmosphere at 800 to 1400°C.

11. The process as claimed in claim 10, wherein, to produce silicon nitride-containing ceramic fibers, the polymeric hydridothiosilazane is initially dissolved in an organic solvent, and fibers are drawn from this solution and pyrolyzed after evaporation of the solvent.

12. The process as claimed in claim 10, wherein, to produce silicon nitride-containing ceramic shaped articles, the pulverulent polymeric hydridothiosilazane is pressed to form shaped articles before pyrolysis.

13. The process as claimed in claim 10, wherein, to produce silicon nitride-containing ceramic coatings, the polymeric hydridothiosilazane is initially dissolved in an organic solvent, and the coating is produced using this solution and pyrolyzed after evaporation of the solvent.

14. The process as claimed in any one of claims 9 to 13, wherein the pyrolysis is carried out at 800 to 1200°C.

15. The process as claimed in any one of claims 9 to 13, wherein the pyrolysis is carried out at 1200 to 1400°C.

## Revendications

1. Procédé pour préparer des hydridothiosilazanes polymères, caractérisé en ce qu'on fait réagir à une température de 30 à 120°C des oligohydridoalkylsilazanes de formule générale (RSiHNH)ₙ dans laquelle n est compris entre environ 3 et 12 et R est un radical alkyle en C₁-C₆ ou alcényle en C₂-C₆, avec du soufre élémentaire dans un éther servant de solvant.

2. Procédé pour préparer des hydridothiosilazanes polymères, caractérisé en ce qu'on fait réagir à une température de 30 à 120°C des oligohydridoalkylsilazanes obtenus par réaction d'un dichlorohydridoalkylsilane RSiHCl₂ avec NH₃, avec du soufre élémentaire dans un éther servant de solvant, R étant un radical alkyle en C₁-C₆ ou alcényle en C₂-C₆.

3. Procédé selon les revendications 1 ou 2, caractérisé en ce que R est le radical méthyle ou vinyle.

4. Procédé selon l'une des revendications 1 à 3, caractérisé en ce que le rapport en moles du soufre à un motif RSiHNH de l'oligohydridoalkylsilazane est de 0,1:1 à 1:1.

5. Hydridothiosilazanes polymères de formule 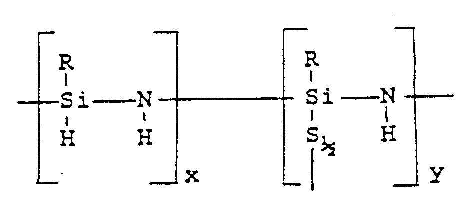 dans laquelle R est un radical alkyle en C₁-C₆ ou alcényle en C₂-C₆, et x et y représentent les fractions molaires des deux motifs structuraux.

6. Hydridothiosilazanes polymères selon la revendication 5, caractérisés en ce que y est compris entre 0,6 et 0,8.

7. Hydridothiosilazanes polymères selon les revendications 5 ou 6, caractérisés en ce que R est le radical méthyle ou vinyle.

8. Hydridothiosilazanes polymères pouvant être obtenus par le procédé selon l'une des revendications 1 à 4.

9. Procédé pour préparer un matériau céramique contenant du nitrure de silicium, caractérisé en ce qu'on pyrolyse des hydridothiosilazanes polymères selon l'une des revendications 5 à 8, dans une atmosphère inerte à une température de 800 à 1400°C.

10. Procédé pour préparer un matériau céramique contenant du nitrure de silicium, caractérisé en ce qu'on pyrolyse des hydridothiosilazanes polymères selon l'une des revendications 5 à 8 dans une atmosphère de NH₃ à une température de 800 à 1400°C.

11. Procédé selon la revendication 10, caractérisé en ce que, pour préparer des fibres céramiques contenant du nitrure de silicium, on dissout d'abord les hydridothiosilazanes polymères dans un solvant organique, on tire des fibres à partir de cette solution et on les pyrolyse après évaporation du solvant.

12. Procédé selon la revendication 10, caractérisé en ce que, pour préparer des objets moulés céramiques contenant du nitrure de silicium, on comprime, avant la pyrolyse et pour former des objets moulés, les hydridothiosilazanes polymères en poudre.

13. Procédé selon la revendication 10, caractérisé en ce que, pour préparer des revêtements céramiques contenant du nitrure de silicium, on dissout d'abord les hydridothiosilazanes polymères dans un solvant organique, on utilise cette solution pour effectuer le revêtement et on pyrolyse cette dernière après évaporation du solvant.

14. Procédé selon l'une des revendications 9 à 13, caractérisé en ce que la pyrolyse est effectuée à une température de 800 à 1200°C.

15. Procédé selon l'une des revendications 9 à 13, caractérisé en ce qu'on effectue la pyrolyse à une température de 1200 à 1400°C.
